# EUROPÄISCHE PATENTSCHRIFT

(11) **EP 2 843 228 B1**
(45) Veröffentlichungstag und Bekanntmachung des Hinweises auf die Patenterteilung: **30.03.2016**
(21) Anmeldenummer: 14173114.1
(22) Anmeldetag: 19.06.2014
(51) Int. Cl.: F03D 80/00

(54) **Windenergieanlagenrotorblatt mit einem elektrischen Heizelement**
Wind energy plant rotor blade with an electrical heating element
Pale de rotor d'éolienne dotée d'un élément chauffant électrique

(30) Priorität: 29.08.2013 DE 202013007659 U
(43) Veröffentlichungstag der Anmeldung: 04.03.2015
(73) Patentinhaber: Nordex Energy GmbH, 22419 Hamburg (DE)
(72) Erfinder: LIPKA, Thomas, DE - 18055 Rostock (DE); KLEIN, Hendrik, DE - 18147 Rostock (DE)
(74) Vertreter: Hauck Patentanwaltspartnerschaft mbB

(56) Entgegenhaltungen:
- EP-B1- 1 187 988
- WO-A1-2012/164167
- DE-A1-102008 002 961

## Beschreibung

Die Erfindung betrifft ein Windenergieanlagenrotorblatt mit einem elektrischen Heizelement. Derartige Heizelemente können einer Vereisung der Rotorblätter entgegenwirken. Sie bestehen aus einem elektrisch leitfähigen Material und werden im Betrieb von einem Heizstrom durchflossen, was zu einer Erwärmung des Heizelements führt. Aus dem Stand der Technik sind Heizelemente aus unterschiedlichen Materialien und mit unterschiedlichen Anordnungen am Windenergieanlagenrotorblatt bekannt geworden.

Beispielsweise zeigt die Druckschrift EP 1 187 988 B1 ein Windenergieanlagenrotorblatt mit mehreren elektrischen Heizelementen, die aus einer Metallfolie bestehen. Die großflächigen Metallfolien sind mit in Längsrichtung des Rotorblatts verlaufenden Versorgungsleitungen verbunden und werden in Querrichtung des Rotorblatts von einem elektrischen Heizstrom durchströmt.

Aus der Druckschrift WO 2011/096851 A1 ist ein Rotorblatt mit Heizelementen aus einem elektrisch leitfähigen Verbundwerkstoff bekannt geworden. Der Verbundwerkstoff enthält Nanostrukturen aus Kunststoff, insbesondere Kohlenstoff-Nanoröhren.

Aus den beiden Druckschriften EP 2 597 305 A1 und EP 2 602 455 A1 sind Windenergieanlagenrotorblätter mit elektrischen Heizelementen aus Kohlenstofffasermatten bekannt geworden. Die Kohlenstofffasermatten erstrecken sich in Längsrichtung des Rotorblatts und werden auch in dieser Richtung von einem Heizstrom durchströmt.

In der europäischen Patentanmeldung Nr. 12 008 055.1 ist ein Windenergieanlagenrotorblatt mit einem elektrischen Heizelement aus einem Kohlenstofffasermaterial bekannt geworden, das ebenfalls in Längsrichtung des Rotorblatts durchströmt wird. Um die Heizleistung bedarfsgerecht über die Länge des Windenergieanlagenrotorblatts verteilt abgeben zu können, schlägt die Anmeldung vor, das elektrische Heizelement über dessen Länge mit einer in einer bestimmten Weise variierenden Breite zu versehen.

Davon ausgehend ist es die Aufgabe der Erfindung, ein Windenergieanlagenrotorblatt mit einem elektrischen Heizelement zur Verfügung zu stellen, das einfach zu fertigen ist und dessen Heizleistung noch genauer an den Bedarf angepasst werden kann.

Diese Aufgabe wird gelöst durch das Windenergieanlagenrotorblatt mit den Merkmalen des Anspruchs 1. Vorteilhafte Ausgestaltungen sind in den sich anschließenden Unteransprüchen angegeben.

Das Windenergieanlagenrotorblatt hat ein elektrisches Heizelement, das einen ersten beheizbaren Flächenabschnitt mit einem ersten Rand und einem zweiten Rand aufweist, die einander gegenüberliegen und zwischen denen der Flächenabschnitt eine Flächenabschnittslänge aufweist, wobei in dem ersten Flächenabschnitt mindestens ein erstes Bündel aus elektrisch leitfähigen Fasern angeordnet ist, das zwischen dem ersten Rand und dem zweiten Rand einen Strompfad mit einer Strompfadlänge bildet, wobei die Strompfadlänge mindestens doppelt so groß ist wie die Flächenabschnittslänge.

Das elektrische Heizelement weist eine beheizbare Fläche auf, deren Abmessungen im Wesentlichen den Abmessungen des gesamten Heizelements entsprechen oder kleiner als diese sein können. Der erste beheizbare Flächenabschnitt kann der gesamten beheizbaren Fläche des Heizelements entsprechen oder einem beliebigen Teil davon. Der erste beheizbare Flächenabschnitt kann eine im Wesentlichen rechteckige Form aufweisen. Die beiden einander gegenüberliegenden Ränder des ersten Flächenabschnitts können mit einem Rand der insgesamt beheizbaren Fläche zusammenfallen. Es kann sich bei den beiden Rändern jedoch auch um eine nur gedankliche Unterteilung der insgesamt beheizbaren Fläche in mehrere Abschnitte handeln. Der Flächenabschnitt kann ebenso wie das gesamte elektrische Heizelement an einer aerodynamischen Oberfläche des Windenergieanlagenrotorblatts angeordnet sein, alternativ auch innerhalb des Windenergieanlagenrotorblatts benachbart zu einer aerodynamischen Oberfläche, beispielsweise davon getrennt durch eine dünne Materiallage und/oder eine Oberflächenbeschichtung. Der Flächenabschnitt kann mehr oder weniger eben sein oder eine gekrümmte Geometrie aufweisen. Die Flächenabschnittslänge bezeichnet die Abmessung des Flächenabschnitts zwischen den beiden einander gegenüberliegenden Rändern und ist bei einem gekrümmten Flächenabschnitt entlang der gekrümmten Fläche zu messen.

Das erste Bündel aus elektrisch leitfähigen Fasern besteht aus einer Vielzahl von Filamenten, beispielsweise aus Kohlenstofffasern oder Edelstahlfasern. Diese können mehr oder weniger parallel angeordnet sein. In diesem Fall wird das Bündel auch als Roving bezeichnet. Bei der Erfindung kann das Bündel aus elektrisch leitfähigen Fasern auch aus nicht parallelen Filamenten aufgebaut sein, beispielsweise in gedrehter oder geflochtener Anordnung, oder mit anderen Fasermaterialien gemischt. Beispielsweise kann ein Kohlenstofffaserbündel zwischen 1.000 und 50.000 Filamente aufweisen.

Das erste Bündel aus elektrisch leitfähigen Fasern bildet zwischen dem ersten Rand und dem zweiten Rand einen Strompfad, der eine bestimmte Strompfadlänge aufweist. Damit ist gemeint, dass zwischen dem ersten Rand und dem zweiten Rand durch das erste Bündel aus elektrisch leitfähigen Fasern an jedem Punkt im Wesentlichen der gleiche Strom fließt. Der elektrische Heizstrom fließt in diesem Bereich also durch das erste Bündel aus elektrisch leitfähigen Fasern hindurch und folgt dessen räumlichem Verlauf. Zwischen dem ersten Rand und dem zweiten Rand ist das erste Bündel aus elektrisch leitfähigen Fasern von gegebenenfalls vorhandenen, weiteren elektrisch leitfähigen Elementen elektrisch isoliert. Anders als bei elektrischen Heizelementen aus Kohlenstofffasermatten wie Gelegen oder Geweben gibt es im Bereich des ersten Bündels aus elektrisch leitfähigen Fasern innerhalb der beheizbaren Fläche keine Kreuzungspunkte, an denen sich der elektrische Strom auf unterschiedliche Pfade aufteilt. Dadurch steht bei gegebenen elektrischen Parametern (elektrischer Widerstand des Bündels aus elektrisch leitfähigen Fasern, zwischen den beiden Rändern anliegende Spannungsdifferenz) fest, welche Heizleistung das Bündel aus elektrisch leitfähigen Fasern erzeugt. Ein weiterer Vorteil besteht darin, dass es anders als bei bekannten Kohlenstofffasermatten nicht zu lokalen Überhitzungen, sogenannten "Hotspots", an den Kreuzungspunkten zweier Kohlenstofffaserbündel kommen kann.

Eine weitere Besonderheit der Erfindung besteht darin, dass die Strompfadlänge mindestens doppelt so groß ist wie die Flächenabschnittslänge. Insbesondere kann die Strompfadlänge im Bereich von 2 bis 100 Mal, bevorzugt im Bereich von etwa 4 bis 40 Mal so lang sein wie die Flächenabschnittslänge. Das Bündel aus elektrisch leitfähigen Fasern verbindet die beiden Ränder des Flächenabschnitts also nicht geradlinig, sondern nimmt zwischen den beiden Rändern einen beispielsweise geschwungenen, gestuften, zickzack- oder schlangenlinienartigen Verlauf, sodass die Länge des ersten Bündels aus elektrisch leitfähigen Fasern und dementsprechend die von dem Bündel aus elektrisch leitfähigen Fasern gebildete Strompfadlänge wesentlich größer ist als die Länge des von dem ersten Bündel aus elektrisch leitfähigen Fasern beheizten Flächenabschnitts. Diese Besonderheit ist von großem praktischem Nutzen, weil bei einer zu beheizenden Fläche mit vorgegebenen Abmessungen und bei gegebenen elektrischen Rahmenbedingungen in vielen Fällen mit herkömmlichen Kohlenstofffaserbündeln die gewünschte Heizleistung erzielt werden kann.

Die aus dem eingangs diskutierten Stand der Technik bekannten elektrischen Heizelemente auf Kohlenstofffaserbasis verwenden stets in Längsrichtung des Rotorblatts durchströmte Heizelemente. Diese weisen also eine große Länge von beispielsweise 30 m oder mehr auf. Bei einer vorgegebenen Heizspannung von beispielsweise 400 V kann für das elektrische Heizelement dann eine praxistaugliche Dicke von beispielsweise 0,1 mm gewählt werden, um einen geeigneten elektrischen Widerstand einzustellen und die gewünschte Heizleistung zu erzeugen.

Bei der Erfindung können wesentlich kürzere beheizbare Flächenabschnitte ausgebildet werden, beispielsweise mit einer Länge im Bereich von 20 cm bis 5 m, sodass insbesondere über die Länge des Rotorblatts verteilt gezielt unterschiedlich abgestimmte Heizelemente eingesetzt werden können. Wollte man derart kurze Flächenabschnitte für eine Heizspannung im Bereich von 200 V bis 800 V, insbesondere für die genannte, bevorzugte Heizspannung von ungefähr 400 V, aus Kohlenstofffasergelegen oder -geweben herstellen, müsste das Material zwecks Erreichung eines ausreichenden elektrischen Widerstands so dünn gewählt werden, dass die Herstellung des Rotorblatts kaum noch praktikabel wäre. Bei der Erfindung können hingegen Kohlenstofffaserbündel herkömmlicher und gut verarbeitbarer Dicke eingesetzt werden, weil der gewünschte höhere elektrische Widerstand durch den längeren Strompfad erzielt wird.

Das Windenergieanlagenrotorblatt kann insbesondere aus einem Faserverbundwerkstoff gefertigt sein, zum Beispiel aus glas- oder kohlenstofffaserverstärktem Kunststoff. Bei dieser Bauweise sind elektrische Heizelemente aus einem Kohlenstofffasermaterial fertigungstechnisch und strukturell besonders gut zu integrieren.

In einer Ausgestaltung weist das Heizelement ein flächiges Trägermaterial auf, an dem das mindestens eine erste Bündel aus elektrisch leitfähigen Fasern in einer vorgegebenen Anordnung befestigt ist. Das flächige Trägermaterial kann beispielsweise ein textiles Gewebe aus Verstärkungsfasern, insbesondere elektrisch isolierenden Verstärkungsfasern wie beispielsweise Glasfasern, sein. In Betracht kommt auch ein textiles Material beispielsweise aus Polyethylen oder Polyamid. Das Bündel aus elektrisch leitfähigen Fasern kann einen Teil eines solchen Gewebes bilden oder nachträglich an dem Trägermaterial befestigt worden sein, beispielsweise durch Vernähen mittels einer CNC-Sticktechnologie. Das Trägermaterial und das erste Bündel aus elektrisch leitfähigen Fasern bilden ein vorgefertigtes Halbzeug, das bei der Fertigung des Windenergieanlagenrotorblatts fest mit den übrigen Komponenten des Rotorblatts verbunden wird, beispielsweise durch Verkleben mit einer Rotorblattschale. Das Halbzeug kann auch bei der Herstellung einer Komponente des Rotorblatts, beispielsweise einer Halbschale, in diese integriert werden, beispielsweise indem es in eine Herstellungsform für eine Rotorblatthalbschale gemeinsam mit weiteren Verstärkungsfasern eingelegt und in eine Kunststoffmatrix eingebettet wird, beispielsweise in einem Vakuuminfusionsverfahren. Die Verwendung eines solchen Halbzeugs stellt sicher, dass sich das Bündel aus elektrisch leitfähigen Fasern in der gewünschten Anordnung befindet.

In einer Ausgestaltung liegt das flächige Trägermaterial mit den elektrisch leitfähigen Faserbündeln als vorgeformtes steifes Bauteil vor. Hierzu wird das Trägermaterial mit den elektrische leitfähigen Faserbündeln auf eine der Nasenkante des Rotorblatts entsprechende Form aufgebracht, mit einem Matrixmaterial infundiert und ausgehärtet. Das ausgehärtete Bauteil wird auf das Rotorblatt aufgeklebt. Alternativ kann das ausgehärtete Trägermaterial bereits vor der Montage auf das Rotorblatt mit einer Haftschicht und/oder Erosionsschutzschicht versehen werden.

In einer Ausgestaltung ist das flächige Trägermaterial als geometrisch flexibles Bauteil ausgebildet. Hierzu wird das textile Trägermaterial mit den elektrisch leitfähigen Faserbündeln mit einem Matrixmaterial infundiert, welches auch nach dem Aushärten eine gewisse Flexibilität aufweist, beispielsweise Silikon oder Polyurethan. Alternativ kann das flächige Trägermaterial auch vollständig aus einem flexiblen Kunststoffmaterial bestehen. Hier kommen neben dünnen Matten aus Silikon oder Polyurethan auch Kunststofffolien in Betracht. Die elektrisch leitfähigen Faserbündel werden auf eine Schicht aus dem flexiblem Kunststoffmaterial aufgebracht oder in dieses integriert. Die geometrische Flexibilität ist von Vorteil, da das Trägermaterial auf einer ebenen Fläche bearbeitet und danach auf einer doppelt gekrümmten Oberfläche des Rotorblattes abgelegt und fixiert werden kann. Das geometrisch flexible Trägermaterial kann strukturell gut integriert werden, erträgt größere Dehnungen des Rotorblatts im Betrieb der Windenergieanlage und baut thermische und mechanische Spannungen ab. Auf eine Erosionsschutzschicht kann gegebenenfalls verzichtet werden, da das flexible Kunststoffmaterial toleranter gegen aufschlagende Regentropfen oder Staubpartikel ist.

In einer Ausgestaltung weist das Windenergieanlagenrotorblatt eine Druckseite und eine Saugseite auf, wobei der erste Rand auf der Druckseite und der zweite Rand auf der Saugseite angeordnet ist. Der Flächenabschnitt erstreckt sich also um eine Profilnasenkante des Rotorblatts herum. Insbesondere kann der Flächenabschnitt in einer Querrichtung des Windenergieanlagenrotorblatts mit einem elektrischen Heizstrom versorgbar sein, also senkrecht zu einer Längsrichtung des Windenergieanlagenrotorblatts. Alternativ kann der Flächenabschnitt auch in einer Längsrichtung des Windenergieanlagenrotorblatts mit Strom versorgbar sein. In dieser Ausgestaltung verläuft die Flächenabschnittslänge in einer Längsrichtung des Rotorblatts.

In einer Ausgestaltung weist der erste Flächenabschnitt einen ersten Teilbereich und einen zweiten Teilbereich auf, die beide mit dem mindestens einen Bündel aus elektrisch leitfähigen Fasern beheizbar sind, wobei das mindestens eine erste Bündel aus elektrisch leitfähigen Fasern in jedem der beiden Teilbereiche eine Vielzahl von regelmäßig angeordneten Abschnitten aufweist und die Abstände zwischen benachbarten Abschnitten im ersten Teilbereich kleiner sind als im zweiten Teilbereich. Beispielsweise kann das Bündel aus elektrisch leitfähigen Fasern in jedem der beiden Teilbereiche schlangenlinien- oder serpentinenartig angeordnet sein. Durch die engere Anordnung im ersten Teilbereich ist die dort pro Fläche erzeugte Heizleistung größer als im zweiten Teilbereich. Dadurch kann sogar im Bereich eines einzelnen Flächenabschnitts, der von dem ersten Bündel aus elektrisch leitfähigen Fasern beheizt wird, eine gezielte Anpassung der Heizleistung vorgenommen werden.

In einer Ausgestaltung ist das mindestens eine erste Bündel aus elektrisch leitfähigen Fasern an einem Anschlusspunkt mit einem metallischen Leiter verbunden. Der metallische Leiter kann insbesondere eine Versorgungsleitung sein, über die ein elektrischer Heizstrom zugeführt wird. Grundsätzlich kann das Bündel aus elektrisch leitfähigen Fasern auf beliebige Weise mit einem metallischen Leiter kontaktiert werden, insbesondere durch Schweißen, Crimpen, Leitkleben oder Spleißen. Durch ein unmittelbares Verschweißen wird ein besonders zuverlässiger und dauerhafter, stoffschlüssiger Kontakt hergestellt.

In einer Ausgestaltung ist in das mindestens eine erste Bündel aus elektrisch leitfähigen Fasern an einem Anschlusspunkt ein metallischer Draht eingearbeitet Der metallische Draht kann beispielsweise ein Kupferdraht sein, welcher in das Bündel aus elektrisch leitfähigen Fasern eingestickt werden kann. Durch das Einsticken durchdringt der Kupferdraht das Bündel aus elektrisch leitfähigen Fasern mehrfach und liegt an einer Vielzahl einzelner Fasern an, sodass ein guter formschlüssiger bzw. kraftschlüssiger elektrischer Kontakt erzielt wird. Ein auf diese Weise eingestickter metallischer Draht kann dann einfach mit einer elektrischen Versorgungsleitung, die einen größeren Querschnitt aufweist, verbunden werden.

In einer Ausgestaltung weist das Heizelement ein zweites Bündel aus elektrisch leitfähigen Fasern auf, mit dem ein zweiter Flächenabschnitt des Heizelements beheizbar ist, wobei ein erstes Ende des ersten Bündels aus elektrisch leitfähigen Fasern mit einem ersten Ende des zweiten Bündels aus elektrisch leitfähigen Fasern und ein zweites Ende des ersten Bündels aus elektrisch leitfähigen Fasern mit einem zweiten Ende des zweiten Bündels aus elektrisch leitfähigen Fasern elektrisch verbunden sind. Mit anderen Worten sind die beiden Bündel aus elektrisch leitfähigen Fasern, die jeweils einen Flächenabschnitt beheizen, parallel geschaltet. Der zweite Flächenabschnitt kann in allen Einzelheiten so ausgestaltet sein wie der erste Flächenabschnitt. Insbesondere kann auch er einen ersten und zweiten Rand aufweisen und das zweite Bündel aus elektrisch leitfähigen Fasern kann einen Strompfad mit einer Strompfadlänge aufweisen, die mindestens doppelt so groß ist wie eine Flächenabschnittslänge des zweiten Flächenabschnitts. Das erste und zweite Bündel aus elektrisch leitfähigen Fasern können nicht nur gleiche Längen und Dicken aufweisen, sondern können sich auch in einem oder beiden dieser Parameter voneinander unterscheiden. Dadurch kann die Heizleistung innerhalb des Heizelements in einer gewünschten Weise verteilt werden. Bei Befestigung beider Bündel aus elektrisch leitfähigen Fasern an demselben Trägermaterial kann die lokale Verteilung der Heizleistung im Vorfeld genau festgelegt werden.

In einer Ausgestaltung sind der erste Flächenabschnitt und der zweite Flächenabschnitt in einer Längsrichtung des Heizelements aneinandergereiht, sodass der zweite Rand des ersten Flächenabschnitts und ein erster Rand des zweiten Flächenabschnitts benachbart angeordnet sind und ein Abstand zwischen dem ersten Rand des ersten Flächenabschnitts und dem ersten Rand des zweiten Flächenabschnitts von einem im Wesentlichen geradlinig angeordneten Längsabschnitt des zweiten Bündels aus elektrisch leitfähigen Fasern überbrückt wird und/oder ein Abstand zwischen dem zweiten Rand des ersten Flächenabschnitts und einem zweiten Rand des zweiten Flächenabschnitts von einem im Wesentlichen geradlinig angeordneten Längsabschnitt des ersten Bündels aus elektrisch leitfähigen Fasern überbrückt wird. In diesem Fall sind die beiden Flächenabschnitte elektrisch parallel geschaltet, jedoch "in Reihe" angeordnet. Auch durch diese Maßnahme kann bei geeigneter Wahl der Parameter die elektrische Heizleistung zielgenau verteilt werden. Dass die Längsabschnitte im Wesentlichen geradlinig angeordnet sind, bedeutet, dass ihre Länge allenfalls geringfügig größer ist als der überbrückte Abstand, beispielsweise um maximal 50 %, 30 %, 15 % oder weniger.

In einer Ausgestaltung weist das Windenergieanlagenrotorblatt eine Druckseite, eine Saugseite, eine erste elektrische Versorgungsleitung, die an der Druckseite angeordnet ist, eine zweite elektrische Versorgungsleitung, die an der Saugseite angeordnet ist, und eine Vielzahl der Heizelemente auf, wobei jedes der Heizelemente einen ersten Anschlusspunkt und einen zweiten Anschlusspunkt aufweist und die ersten Anschlusspunkte elektrisch mit der ersten Versorgungsleitung und die zweiten Anschlusspunkte elektrisch mit der zweiten Versorgungsleitung verbunden sind. Es ist also eine Vielzahl von Heizelementen elektrisch parallel geschaltet. Jedes der Heizelemente erstreckt sich von der Druckseite um die Profilnasenkante herum zur Saugseite und wird bevorzugt in Querrichtung des Windenergieanlagenrotorblatts durchströmt. Bei dieser Anordnung kann an jeder Radiusposition des Windenergieanlagenrotorblatts ein auf den dort gegebenen Heizleistungsbedarf abgestimmtes Heizelement eingesetzt werden.

In einer Ausgestaltung sind die elektrischen Heizelemente an unterschiedlichen Radiuspositionen angeordnet und jedes der elektrischen Heizelemente weist eine beheizbare Fläche und einen elektrischen Widerstand auf, wobei in Richtung von einer Blattwurzel zu einer Blattspitze hin ein Produkt aus elektrischem Widerstand und beheizbarer Fläche abnimmt. Infolge dieser Auslegung nimmt die elektrische Heizleistung pro Flächeneinheit der Heizelemente zur Blattspitze hin zu. Das bedeutet, dass bei gleichbleibendem elektrischen Widerstand und zur Blattspitze hin geringer werdender Fläche der Heizelemente die spezifische Heizleistung (W/qm) erhöht wird. Für jedes Heizelement kann so ein Bündel aus elektrisch leitfähigen Fasern mit gleicher Länge und gleichem Durchmesser verwendet werden.

In einer Ausgestaltung ist die erste Versorgungsleitung und/oder die zweite Versorgungsleitung elektrisch mit mindestens einem Blitzrezeptor im Bereich der Blattspitze verbunden. In diesem Fall kann die betreffende Versorgungsleitung eine Doppelfunktion erfüllen und zusätzlich zu der Versorgung des Heizelements mit einem elektrischen Heizstrom als Blitzschutzleiter fungieren. Ein wichtiger Vorteil dieser Ausgestaltung besteht darin, dass im Falle eines Blitzschlags ein Potentialausgleich zwischen den beiden Versorgungsleitungen durch die elektrischen Heizelemente hergestellt wird, wodurch eine Beschädigung oder gar Zerstörung des Rotorblatts durch Überschläge infolge elektromagnetischer Induktion verhindert werden kann. Die erfindungsgemäße elektrische Heizeinrichtung mit einzelnen Bündeln aus elektrisch leitfähigen Fasern, insbesondere Kohlenstofffaserbündeln, weist eine für diesen Potentialausgleich erforderliche Stromtragfähigkeit auf. Die Kohlenstofffaserbündel sind wesentlich temperaturstabiler als elektrische Heizelemente aus metallischen Materialien, beispielsweise mit Widerstandsdrähten. Sie können daher kurzzeitig sehr hohe Ströme beschädigungsfrei führen.

In einer Ausgestaltung ist die erste Versorgungsleitung galvanisch mit dem Blitzrezeptor und die zweite Versorgungsleitung über eine Funkenstrecke oder einen Varistorableiter mit dem Blitzrezeptor verbunden oder umgekehrt. Die genannten Bauteile bewirken während des Betriebs des Heizelements eine ausreichende elektrische Isolation zwischen den beiden Versorgungsleitungen. Im Falle eines Blitzschlags, beispielsweise bei Potentialdifferenzen von 2.500 V oder mehr, stellen sie jedoch eine elektrische Verbindung her, sodass beide Versorgungsleitungen als Blitzschutzleiter wirken.

In einer Ausgestaltung ist mindestens ein weiterer Blitzrezeptor in einem Abstand von der Blattspitze angeordnet und mit der ersten Versorgungsleitung oder mit der zweiten Versorgungsleitung verbunden. Die Verwendung zusätzlicher Blitzrezeptoren wirkt einer Beschädigung des Rotorblatts bei in einem Abstand von der Blattspitze einschlagenden Blitzen entgegen. In Verbindung mit dem durch die elektrischen Heizelemente bewirkten Potentialausgleich ist es möglich, derartige Blitzrezeptoren direkt mit einer der beiden Versorgungsleitungen zu verbinden, ohne dass es bei Einschlag eines Blitzes zu einer Zerstörung durch Überschläge infolge elektromagnetischer Induktion kommt.

In einer Ausgestaltung ist das elektrische Heizelement mehrschichtig aufgebaut und weist eine Haftschicht zur Verbindung mit dem Rotorblatt und/oder eine Erosionsschutzschicht auf. Die Haftschicht befindet sich auf der Unterseite des Trägermaterials, auf welchem das Bündel aus elektrisch leitfähigen Fasern aufgebracht ist, und kann beispielsweise als zweiseitige Klebefolie ausgebildet sein.

Alternativ kann die Haftschicht aber auch direkt auf dem Trägermaterial aufgebracht sein. Die Haftschicht kann nach dem Auflegen des elektrischen Heizelements auf das Rotorblatt durch Wärme aktiviert werden. Die Erosionsschutzschicht befindet sich auf der Oberseite des Trägermaterials und schützt es vor erhöhtem Abrieb durch während des Betriebs der Windenergieanlage auf das Heizelement auftreffende Partikel. Ein derartig gestaltetes Heizelement kann nach der Fertigstellung des Rotorblatts auf die Rotorblattoberfläche aufgeklebt werden. Bei Zerstörung einzelner Heizelemente können diese einfach ausgetauscht werden.

Die Erfindung wird nachfolgend anhand von in Figuren dargestellten Ausführungsbeispielen näher erläutert. Es zeigen:
- Fig. 1: ein erfindungsgemäßes Windenergieanlagenrotorblatt in einer vereinfachten perspektivischen Ansicht,
- Fig. 2: eine schematische Darstellung eines beheizbaren Bereichs des Windenergieanlagenrotorblatts aus Fig. 1,
- Fign. 3-13: einzelne Heizelemente des Windenergieanlagenrotorblatts aus Fig. 1 in schematischen Darstellungen.

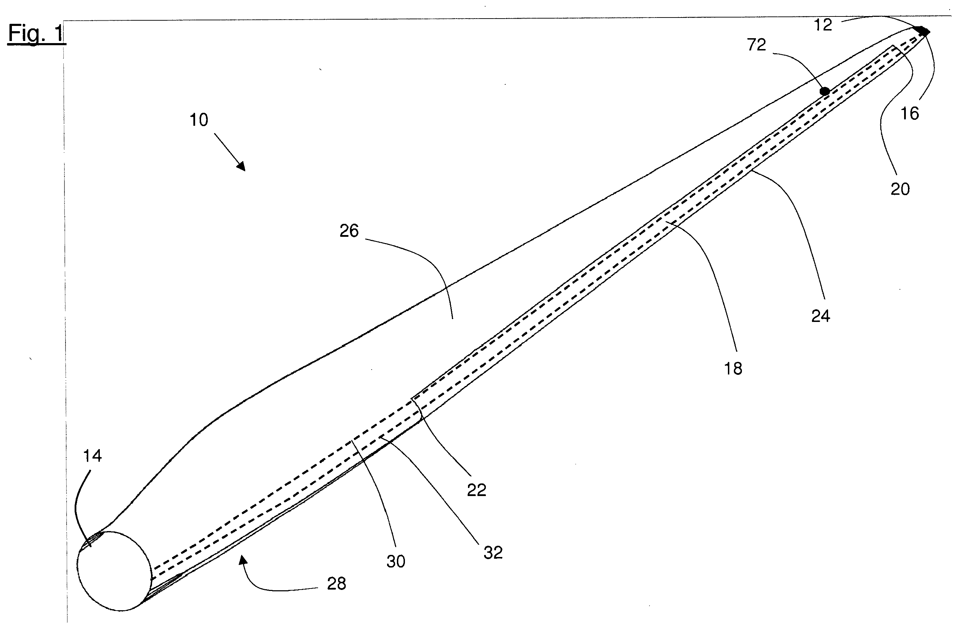

Das Windenergieanlagenrotorblatt 10 aus Fig. 1 weist eine Blattspitze 12 und eine Blattwurzel 14 auf. Im Bereich der Blattwurzel 14 hat das Windenergieanlagenrotorblatt 10 einen kreisförmigen Querschnitt und ist zum Anschluss an eine nicht dargestellte Rotornabe ausgebildet. Im Beispiel handelt es sich um ein Windenergieanlagenrotorblatt 10 für eine Windenergieanlage mit einem Rotor mit im Wesentlichen horizontaler Achse und drei Rotorblättern.

Der mit 18 bezeichnete Bereich des Windenergieanlagenrotorblatts 10 ist mit einer elektrischen Heizeinrichtung beheizbar. Die zu diesem Zweck innerhalb des Bereichs 18 angeordneten Heizelemente sind in der Fig. 1 nicht dargestellt. Der Bereich 18 erstreckt sich über einen Großteil der Gesamtlänge des Windenergieanlagenrotorblatts 10 und beginnt an einem blattwurzelseitigen Ende 22 in einem Abstand von beispielsweise 10 m bis 20 m von der Blattwurzel 14 und erstreckt sich von dort bis zu einem blattspitzenseitigen Ende 20, das nahe der Blattspitze 12, beispielsweise in einem Abstand von 3 m oder weniger davon, angeordnet ist. Insgesamt weist das Windenergieanlagenrotorblatt 10 eine Länge von z.B. 40 m bis 80 m auf. Das Windenergieanlagenrotorblatt 10 hat eine Druckseite 26 und eine Saugseite 28. Der beheizbare Bereich 18 erstreckt sich um eine Profilnasenkante 24 herum.

Im Bereich der Blattspitze 12 ist ein Blitzschutzrezeptor 16 angeordnet. Im gezeigten Beispiel bildet dieser die Blattspitze 12, alternativ kann er jedoch auch in einem geringen Abstand von beispielsweise 5 cm bis 40 cm von der Blattspitze 12 entfernt an Druckseite 26 und Saugseite 28 angeordnet sein. Ein weiterer Blitzschutzrezeptor 72 ist in einem Abstand von der Blattspitze 12 angeordnet und über einen kurzen elektrischen Leiter galvanisch mit der ersten Versorgungsleitung 30 verbunden. Ebenfalls galvanisch mit der ersten Versorgungsleitung 30 verbunden ist der Blitzschutzrezeptor 12 im Bereich der Blattspitze. Die zweite Versorgungsleitung 32 ist über eine Funkenstrecke (nicht dargestellt) mit dem Blitzschutzrezeptor 12 verbunden, sodass ein elektrischer Stromfluss nur bei hohen Spannungsdifferenzen im Fall eines Blitzschlages entsteht. An dieser Stelle kann anstatt der Funkenstrecke auch ein Varistorableiter eingesetzt werden. Im Bereich der Rotorblattwurzel befinden sich weitere Einrichtungen zum Überspannungsschutz (nicht dargestellt).

Die im Bereich 18 angeordneten elektrischen Heizelemente (siehe nachfolgende Figuren) sind mit einer ersten elektrischen Versorgungsleitung 30, die an der Druckseite 26 angeordnet ist, und mit einer zweiten elektrischen Versorgungsleitung 32, die an der Saugseite 28 angeordnet ist, verbunden. Die beiden elektrischen Versorgungsleitungen 30, 32 erstrecken sich bis zur Blattwurzel 14 des Windenergieanlagenrotorblatts 10, wo sie in eine nicht gezeigte Rotornabe hineingeführt bzw. mit weiteren Leitungen darin verbunden sind.

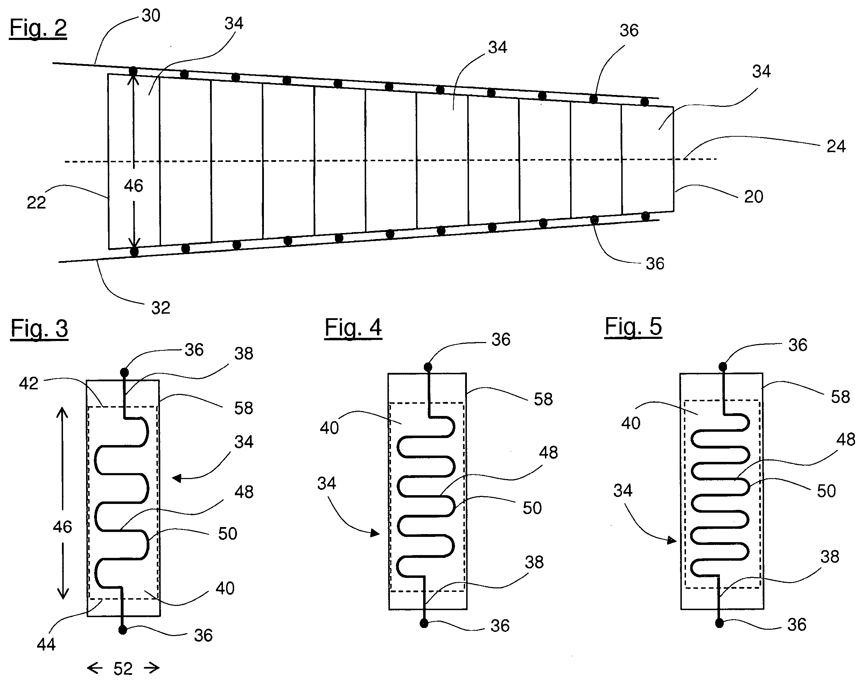

Fig. 2 zeigt schematisch eine Ansicht auf die Profilnasenkante 24 des Windenergieanlagenrotorblatts 10 aus der Fig. 1. Dargestellt ist im Wesentlichen der elektrisch beheizbare Bereich 18. In der Fig. 2 links befindet sich dessen blattwurzelseitiges Ende 22 und in der Fig. 2 rechts dessen blattspitzenseitiges Ende 20. Ebenfalls dargestellt sind die erste und zweite elektrische Versorgungsleitung 30, 32. Eine Vielzahl von elektrischen Heizelementen 34 erstreckt sich von der ersten Versorgungsleitung 30 auf der Druckseite über die Profilnasenkante 24 hinweg bis zur zweiten Versorgungsleitung 32 auf der Saugseite 28 des Windenergieanlagenrotorblatts 10. Jedes dieser Heizelemente 34 weist zwei Anschlusspunkte 36 auf, an denen es mit der jeweiligen Versorgungsleitung 30, 32 verbunden ist.

Die Heizelemente 34 sind also elektrisch parallel geschaltet und decken gemeinsam den gesamten beheizbaren Bereich 18 ab. Jedes der Heizelemente 34 weist zwischen den beiden Anschlusspunkten eine Heizelementlänge auf. Diese wird von dem in der Fig. 2 ganz links nahe der Blattwurzel 14 angeordneten Heizelement 34 in Richtung zu dem am blattspitzenseitigen Ende 20 des Bereichs 18 angeordneten Heizelement 34 hin kleiner.

Einzelheiten der Heizelemente 34 werden anhand der Figuren 3 bis 10 erläutert. Das in der Figur 3 schematisch dargestellte Heizelement 34 weist einen ersten beheizbaren Flächenabschnitt 40 auf, der zur Veranschaulichung mit einer gedachten Begrenzungslinie umrahmt ist. Der erste Flächenabschnitt 40 hat einen ersten Rand 42 und einen zweiten Rand 44, die einander gegenüberliegen. Zwischen dem ersten Rand 42 und dem zweiten Rand 44 weist das Heizelement 34 eine Flächenabschnittslänge 46 auf, die in der Fläche des Heizelements 34, also ggf. einer Krümmung des Heizelements 34 folgend, gemessen wird. Im Ausführungsbeispiel werden als elektrisch leitende Fasern Kohlenstofffasern verwendet. Ein erstes Kohlenstofffaserbündel 38 ist zu einem Teil innerhalb des ersten Flächenabschnitts 40 angeordnet und weist dort einen gekrümmten, etwa schlangenlinienartigen Verlauf auf. Innerhalb des ersten Flächenabschnitts 40 weist das Kohlenstofffaserbündel 38 eine Vielzahl etwa geradliniger, parallel angeordneter Abschnitte 48 auf, die über U-förmig gekrümmte Abschnitte 50 miteinander verbunden sind. Die geradlinigen Abschnitte 48 sind in regelmäßigen Abständen voneinander angeordnet. Eine Breite 52 des ersten Flächenabschnitts 40 wird von der regelmäßigen Anordnung des ersten Kohlenstofffaserbündels 38 bestimmt.

Zwischen dem ersten Rand 42 und dem zweiten Rand 44 bildet das erste Kohlenstofffaserbündel 38 einen Strompfad mit einer Strompfadlänge aus, die mindestens doppelt so groß ist wie die Flächenabschnittslänge 46. Der Strompfad folgt dem gekrümmten Verlauf des Kohlenstofffaserbündels und der gesamte im Bereich des ersten Randes 42 in das Kohlenstofffaserbündel 38 einströmende elektrische Strom verlässt den ersten Flächenabschnitt 40 im Bereich des zweiten Randes 44 wieder durch das erste Kohlenstofffaserbündel 38.

Das erste Kohlenstofffaserbündel 38 erstreckt sich über den ersten Rand 42 und den zweiten Rand 44 des Flächenabschnitts 40 hinaus in mehr oder weniger geradliniger Form und überbrückt ggf. vorhandene Abstände zu den Anschlusspunkten 36, an denen eine Verbindung mit den Versorgungsleitungen 30, 32 erfolgt. Das erste Kohlenstofffaserbündel 38 ist auf einem Trägermaterial 58 aus einem Glasfasergewebe befestigt.

Die Beispiele von Heizelementen 34 der Figuren 4 und 5 entsprechen in ihrem Aufbau demjenigen des Heizelements 34 aus Fig. 3, weisen jedoch wegen der enger als im Beispiel der Fig. 3 benachbarten geradlinigen Abschnitte 48 des Kohlenstofffaserbündels 38 ein noch größeres Verhältnis aus Strompfadlänge zu Flächenabschnittslänge auf. Entsprechend vergrößert sich auch der elektrische Widerstand des Kohlenstofffaserbündels zwischen den beiden Anschlusspunkten 36.

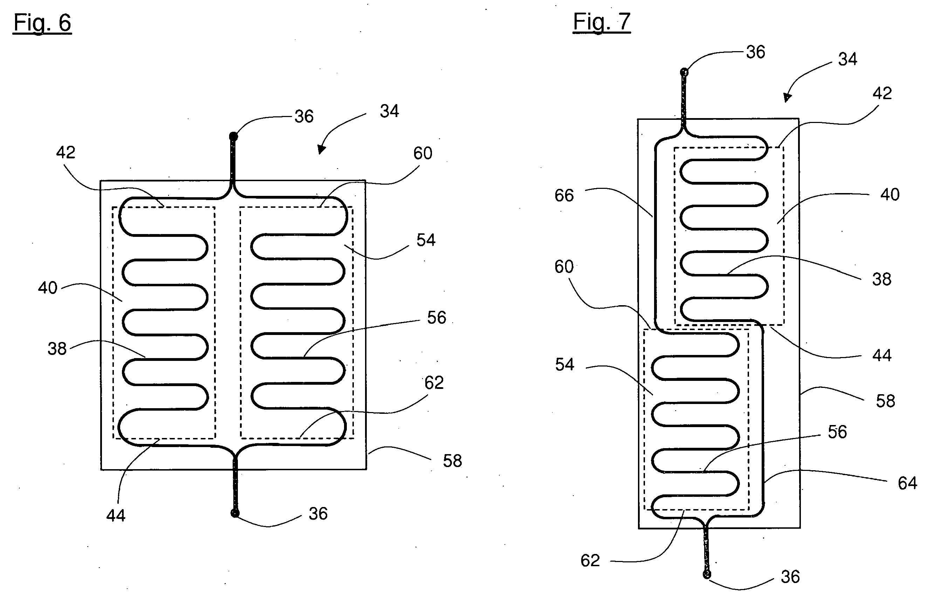

Fig. 6 zeigt ein anderes Heizelement 34, dessen beheizbare Fläche gedanklich in einen ersten Flächenabschnitt 40 und einen zweiten Flächenabschnitt 54 unterteilt ist. Die beiden Flächenabschnitte 40, 54 sind seitlich benachbart angeordnet. Im ersten Flächenabschnitt 40 gibt es ein erstes Kohlenstofffaserbündel 38, dessen Verlauf im Wesentlichen demjenigen der Fig. 3 entspricht. Im zweiten Flächenabschnitt 54 gibt es ein zweites Kohlenstofffaserbündel 56, das innerhalb des zweiten Flächenabschnitts 54 ebenfalls im Wesentlichen den bereits erläuterten, schlangenlinienartig gekrümmten Verlauf aufweist.

Der erste Flächenabschnitt 40 weist einen ersten Rand 42 und einen zweiten Rand 44 auf. Der zweite Flächenabschnitt 54 weist ebenfalls einen ersten Rand 60 und einen zweiten Rand 62 auf. Außerhalb der Flächenabschnitte 40, 54 sind die beiden Kohlenstofffaserbündel 38, 56 zusammengeführt und verlaufen entlang eines Abschnitts in paralleler Anordnung bis hin zu jeweils einem Anschlusspunkt 36.

Fig. 7 zeigt einen anderen möglichen Aufbau eines Heizelements 34, welches ebenfalls einen ersten Flächenabschnitt 40 und einen zweiten Flächenabschnitt 54 aufweist. Innerhalb der beiden Flächenabschnitte 40, 54 gibt es wiederum jeweils ein Kohlenstofffaserbündel 38 bzw. 56 mit dem bereits erläuterten Verlauf. Man erkennt, dass die beiden Flächenabschnitte 40, 54 in Längsrichtung des Heizelements 34 aneinandergereiht sind. Der zweite Rand 44 des ersten Flächenabschnitts 40 grenzt etwa an den ersten Rand 60 des zweiten Flächenabschnitts 54 an und ist benachbart zu diesem angeordnet. Außerhalb der beiden Flächenabschnitte 40, 54 sind die beiden Kohlenstofffaserbündel 38, 56 wie auch in der Fig. 6 zusammengeführt und verlaufen gemeinsam bis hin zu dem jeweiligen Anschlusspunkt 36. Bei der in Längsrichtung aneinandergereihten Anordnung der Fig. 7 wird ein Abstand zwischen dem zweiten Rand 44 des ersten Flächenabschnitts 40 und dem zweiten Rand 62 des zweiten Flächenabschnitts 54 von einem im Wesentlichen geradlinigen Abschnitt 64 des ersten Kohlenstofffaserbündels 38 überbrückt. Ein Abstand zwischen dem ersten Rand 42 des ersten Flächenabschnitts 40 und dem ersten Rand 60 des zweiten Flächenabschnitts 54 wird von einem geradlinigen Abschnitt 66 des zweiten Kohlenstofffaserbündels 56 überbrückt.

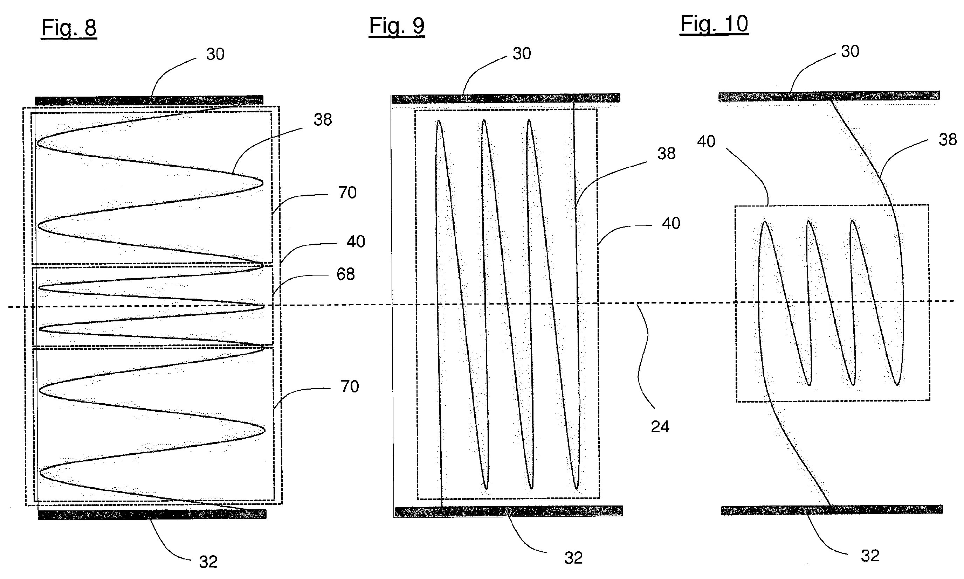

Fig. 8 zeigt ebenfalls schematisch ein anderes Beispiel eines Heizelements 34, welches nur ein erstes Kohlenstofffaserbündel 38 aufweist. Das Kohlenstofffaserbündel 38 erstreckt sich wiederum von der ersten Versorgungsleitung 30 über die Profilnasenkante 24 hinweg bis zur zweiten Versorgungsleitung 32 und ist dabei im Wesentlichen innerhalb eines ersten Flächenabschnitts 40 angeordnet.

Der erste Flächenabschnitt 40 weist einen ersten Teilbereich 68 und zwei zweite Teilbereiche 70 auf. Innerhalb jedes Teilbereichs 68, 70 weist das erste Kohlenstofffaserbündel 38 regelmäßig angeordnete Abschnitte auf, die im gezeigten Beispiel etwa sinuskurvenförmig angeordnet sind. Man erkennt, dass die Abstände zwischen benachbart angeordneten Abschnitten im ersten Teilbereich 68 kleiner sind als in den zweiten Teilbereichen 70, wodurch die pro Flächeneinheit erzeugte Heizleistung im ersten Teilbereich 68, der sich im Beispiel etwa im Bereich der Nasenkante 24 befindet, größer ist als in den beiden zweiten Teilbereichen 70.

Fig. 9 zeigt, dass ein erstes Kohlenstofffaserbündel 38 auch auf andere Weise zwischen den beiden Versorgungsleitungen 30, 32 angeordnet werden kann. Insgesamt verläuft das Kohlenstofffaserbündel 38 etwa sägezahnförmig, wobei geradlinige Abschnitte diesmal annähernd in Längsrichtung des Heizelements 34, also quer zu einer Längsrichtung des Rotorblatts, angeordnet sind.

Im Beispiel der Fig. 10 ist ein Abschnitt mit einem solchen sägezahnförmigen Verlauf des ersten Kohlenstofffaserbündels 38 auf einen engeren Bereich um die Profilnasenkante 24 herum konzentriert und das Kohlenstofffaserbündel 38 führt von dem dort ausgebildeten ersten Flächenabschnitt 40 weiter bis hin zu der ersten bzw. zweiten Versorgungsleitung 30, 32.

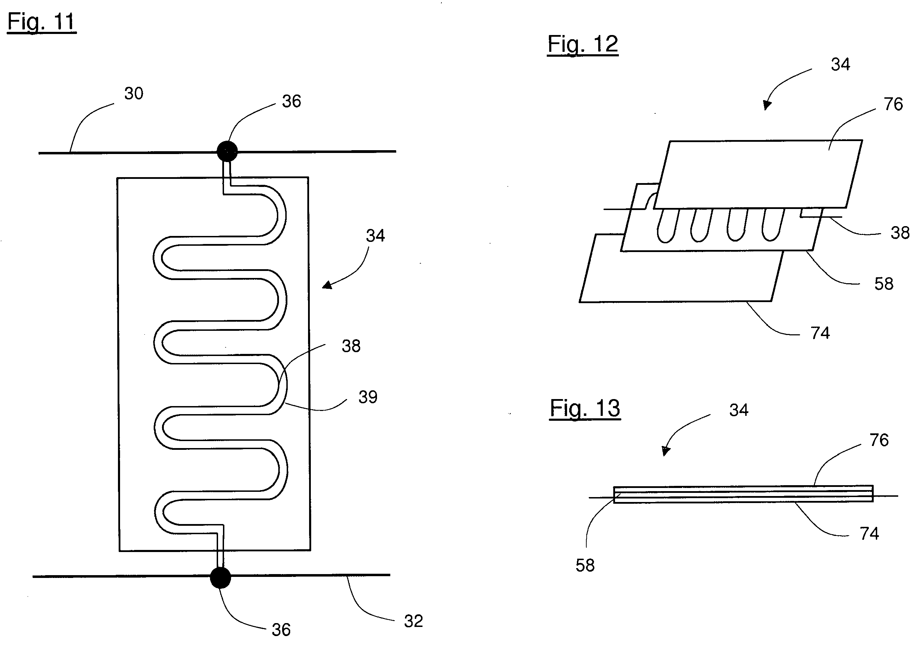

Fig. 11 zeigt einen weiteren möglichen Aufbau eines Heizelements 34. Das erste Kohlenstofffaserbündel 38 verläuft mäanderförmig zwischen den beiden Versorgungsleitungen 30, 32. Parallel zu dem ersten Kohlenstofffaserbündel verläuft ein weiteres Kohlenstofffaserbündel 39. Das weitere Kohlenstofffaserbündel 39 ist in einem geringen Abstand von dem ersten Kohlenstofffaserbündel angeordnet. Die beiden parallel verlaufenden Kohlenstofffaserbündel sind in einem gemeinsamen Anschlusspunkt 36 mit den Versorgungsleitungen 30, 32 verbunden. Durch jedes der parallelen Kohlenstofffaserbündel fließt zwischen den Anschlusspunkten nur ein Teilstrom, wodurch die resultierende Belastung je Kohlenstofffaserbündel geringer wird und diese mit einem geringeren Durchmesser gestaltet werden können. Dünne Kohlenstofffaserbündel sind preiswerter und leichter zu verarbeiten. Neben der zu wählenden Länge des Kohlenstofffaserbündels, welche abhängig von der Größe des auszulegenden Heizfeldes ist und je nach Länge verschiedene Belastungen erfährt, kann so der Gestaltungsparameter der Heizleiterschaltung genutzt werden, um im Falle eines günstigen dünnen Kohlenstofffaserbündels (z.B. 12k-Roving) den gleichen Roving für alle Heizfelder nutzen und trotzdem eine höhere Flächenheizleistung erzielen zu können.

Fig. 12 und Fig. 13 zeigen schematisch einen mehrschichtigen Aufbau des elektrischen Heizelements (34). Auf der Unterseite des Trägermaterials (58), auf welches das Kohlenstofffaserbündel (38) aufgestickt ist, befindet sich eine Haftschicht. Die Haftschicht ist als zweiseitige Klebefolie ausgebildet und wird nach dem Besticken des Trägermaterials mit diesem verbunden. Auf die Oberseite des Trägermaterials ist eine Erosionsschutzschicht aufgebracht, die das Trägermaterial mit dem Kohlenstofffaserbündel vor erhöhtem Abrieb schützt.

### Liste der verwendeten Bezugszeichen:

- 10: Windenergieanlagenrotorblatt
- 12: Blattspitze
- 14: Blattwurzel
- 16: Blitzschutzrezeptor
- 18: beheizbarer Bereich
- 20: blattspitzenseitiges Ende des beheizbaren Bereichs
- 22: blattwurzelseitiges Ende des beheizbaren Bereichs
- 24: Profilnasenkante
- 26: Druckseite
- 28: Saug seite
- 30: erste Versorgungsleitung
- 32: zweite Versorgungsleitung
- 34: Heizelement
- 36: Anschlusspunkt
- 38: erstes Bündel aus elektrisch leitfähigen Fasern/erstes Kohlenstofffaserbündel
- 39: weiteres Bündel aus elektrisch leitfähigen Fasern/weiteres Kohlenstofffaserbündel
- 40: erster beheizbarer Flächenabschnitt
- 42: erster Rand
- 44: zweiter Rand
- 46: Flächenabschnittslänge
- 48: geradlinige Abschnitte
- 50: U-förmig gekrümmte Abschnitte
- 52: Breite des ersten Flächenabschnitts
- 54: zweiter Flächenabschnitt
- 56: zweites Bündel aus elektrisch leitfähigen Fasern/zweites Kohlenstofffaserbündel
- 58: Trägermaterial
- 60: erster Rand
- 62: zweiter Rand
- 64: geradliniger Abschnitt
- 66: geradliniger Abschnitt
- 68: erster Teilbereich
- 70: zweiter Teilbereich
- 72: weiterer Blitzschutzrezeptor
- 74: Haftschicht
- 76: Erosionsschutzschicht

## Patentansprüche

1. Windenergieanlagenrotorblatt (10) mit einem elektrischen Heizelement (34), das einen ersten beheizbaren Flächenabschnitt (40) mit einem ersten Rand (42) und einem zweiten Rand (44) aufweist, die einander gegenüberliegen und zwischen denen der erste Flächenabschnitt (40) eine Flächenabschnittslänge (46) aufweist, **dadurch gekennzeichnet, dass** in dem ersten Flächenabschnitt (40) mindestens ein erstes Bündel aus elektrisch leitfähigen Fasern (38) angeordnet ist, das zwischen dem ersten Rand (42) und dem zweiten Rand (44) einen Strompfad mit einer Strompfadlänge bildet, wobei die Strompfadlänge mindestens doppelt so groß ist wie die Flächenabschnittslänge (46).

2. Windenergieanlagenrotorblatt (10) nach Anspruch 1, **dadurch gekennzeichnet, dass** das elektrische Heizelement (34) ein flächiges Trägermaterial (58) aufweist, an dem das mindestens eine erste Bündel aus elektrisch leitfähigen Fasern (38) in einer vorgegebenen Anordnung befestigt ist.

3. Windenergieanlagenrotorblatt (10) nach Anspruch 1 oder 2, **dadurch gekennzeichnet, dass** das Windenergieanlagenrotorblatt (10) eine Druckseite (26) und eine Saugseite (28) aufweist, wobei der erste Rand (42) auf der Druckseite (26) und der zweite Rand (44) auf der Saugseite (28) angeordnet ist.

4. Windenergieanlagenrotorblatt (10) nach einem der Ansprüche 1 bis 3, **dadurch gekennzeichnet, dass** der erste Flächenabschnitt (40) einen ersten Teilbereich (68) und einen zweiten Teilbereich (70) aufweist, die beide mit dem mindestens einen ersten Bündel aus elektrisch leitfähigen Fasern (38) beheizbar sind, wobei das mindestens eine erste Bündel aus elektrisch leitfähigen Fasern (38) in jedem der beiden Teilbereiche (68, 70) eine Vielzahl von regelmäßig angeordneten Abschnitten aufweist und die Abstände zwischen benachbarten Abschnitten im ersten Teilbereich (68) kleiner sind als im zweiten Teilbereich (70).

5. Windenergieanlagenrotorblatt (10) nach einem der Ansprüche 1 bis 4, **dadurch gekennzeichnet, dass** das mindestens eine erste Bündel aus elektrisch leitfähigen Fasern (38) an einem Anschlusspunkt (36) mit einem elektrischen Leiter verbunden ist.

6. Windenergieanlagenrotorblatt (10) nach einem der Ansprüche 1 bis 5, **dadurch gekennzeichnet, dass** in das mindestens eine erste Bündel aus elektrisch leitfähigen Fasern (38) an einem Anschlusspunkt (36) ein metallischer Draht eingearbeitet ist.

7. Windenergieanlagenrotorblatt (10) nach einem der Ansprüche 1 bis 6, **dadurch gekennzeichnet, dass** das Heizelement (34) ein zweites Bündel aus elektrisch leitfähigen Fasern (56), mit dem ein zweiter Flächenabschnitt (54) des Heizelements (34) beheizbar ist, aufweist, wobei ein erstes Ende des ersten Bündels aus elektrisch leitfähigen Fasern (38) mit einem ersten Ende des zweiten Bündels aus elektrisch leitfähigen Fasern (56) und ein zweites Ende des ersten Bündels aus elektrisch leitfähigen Fasern (38) mit einem zweiten Ende des zweiten Bündels aus elektrisch leitfähigen Fasern (56) elektrisch verbunden sind.

8. Windenergieanlagenrotorblatt (10) nach Anspruch 7, **dadurch gekennzeichnet, dass** der erste Flächenabschnitt (40) und der zweite Flächenabschnitt (54) in einer Längsrichtung des Heizelements (34) aneinandergereiht sind, wobei der zweite Rand (44) des ersten Flächenabschnitts (40) und ein erster Rand (60) des zweiten Flächenabschnitts (54) benachbart angeordnet sind und ein Abstand zwischen dem ersten Rand (42) des ersten Flächenabschnitts (40) und dem ersten Rand (60) des zweiten Flächenabschnitts (54) von einem im Wesentlichen geradlinig angeordneten Längsabschnitt (66) des zweiten Bündel aus elektrisch leitfähigen Fasern (56) überbrückt wird und/oder ein Abstand zwischen dem zweiten Rand (44) des ersten Flächenabschnitts (40) und einem zweiten Rand (62) des zweiten Flächenabschnitts (54) von einem im Wesentlichen geradlinig angeordneten Längsabschnitt (64) des ersten Bündel aus elektrisch leitfähigen Fasern (38) überbrückt wird.

9. Windenergieanlagenrotorblatt (10) nach einem der Ansprüche 1 bis 8, **dadurch gekennzeichnet, dass** das Windenergieanlagenrotorblatt (10) eine Druckseite (26), eine Saugseite (28), eine erste elektrische Versorgungsleitung (30), die an der Druckseite (26) angeordnet ist, eine zweite elektrische Versorgungsleitung (32), die an der Saugseite (28) angeordnet ist, und eine Vielzahl der Heizelemente (34) aufweist, wobei jedes der Heizelemente(34) einen ersten Anschlusspunkt (36) und einen zweiten Anschlusspunkt (36) aufweist und die ersten Anschlusspunkte (36) elektrisch mit der ersten Versorgungsleitung (30) und die zweiten Anschlusspunkte (36) elektrisch mit der zweiten Versorgungsleitung (32) verbunden sind.

10. Windenergieanlagenrotorblatt (10) nach Anspruch 9, **dadurch gekennzeichnet, dass** die elektrischen Heizelemente (34) an unterschiedlichen Radiuspositionen angeordnet sind und jedes der elektrischen Heizelemente (34) eine beheizbare Fläche und einen elektrischen Widerstand aufweist, wobei in Richtung von einer Blattwurzel (14) zu einer Blattspitze (12) hin ein Quotient aus elektrischem Widerstand und beheizbarer Fläche zunimmt.

11. Windenergieanlagenrotorblatt (10) nach Anspruch 9 oder 10, **dadurch gekennzeichnet, dass** die erste Versorgungsleitung (30) und/oder die zweite Versorgungsleitung (32) elektrisch mit mindestens einem Blitzrezeptor (16) im Bereich der Blattspitze (12) verbunden ist.

12. Windenergieanlagenrotorblatt (10) nach Anspruch 11, **dadurch gekennzeichnet, dass** die erste Versorgungsleitung (30) galvanisch mit dem Blitzrezeptor (16) und die zweite Versorgungsleitung (32) über eine Funkenstrecke oder einen Varistorableiter mit dem Blitzrezeptor (16) verbunden ist oder umgekehrt.

13. Windenergieanlagenrotorblatt (10) nach Anspruch 11 oder 12, **dadurch gekennzeichnet, dass** mindestens ein weiterer Blitzrezeptor (72) in einem Abstand von der Blattspitze (12) angeordnet und mit der ersten Versorgungsleitung (30) oder mit der zweiten Versorgungsleitung (32) verbunden ist.

14. Windenergieanlagenrotorblatt (10) nach Anspruch 1 bis 13, **dadurch gekennzeichnet, dass** das elektrische Heizelement (34) mehrschichtig aufgebaut ist und eine Haftschicht zur Verbindung mit dem Rotorblatt und/oder eine Erosionsschutzschicht aufweist.

## Claims

1. A wind turbine rotor blade (10) with an electrical heating element (34), which has a first heatable surface section (40) with a first edge (42) and a second edge (44), which lie opposite each other and between which the first surface section (40) has a surface sectional length (46), **characterized in that** at least one first bundle of electrically conductive fibers (38) is arranged in the first surface section (40), which forms a current path with a current path length between the first edge (42) and the second edge (44), wherein the current path length is at least twice as large as the surface section length (46).

2. The wind turbine rotor blade (10) according to claim 1, **characterized in that** the electrical heating element (34) has a planar carrier material (58), on which the at least one first bundle made of electrically conductive fibers (38) is fastened in a predetermined arrangement.

3. The wind turbine rotor blade (10) according to claim 1 or 2, **characterized in that** the wind turbine rotor blade (10) has a pressure side (26) and a suction side (28), wherein the first edge (42) is arranged on the pressure side (26) and the second edge (44) on the suction side (28).

4. The wind turbine rotor blade (10) according to one of claims 1 to 3, **characterized in that** the first surface section (40) has a first subarea (68) and a second subarea (70), both of which are heatable with the at least one first bundle of electrically conductive fibers (38), wherein the at least one first bundle of electrically conductive fibers (38) in each of the two subareas (68, 70) has a plurality of regularly arranged sections and the distances between adjacent sections are smaller in the first subarea (68) than in the second subarea (70).

5. The wind turbine rotor blade (10) according to one of claims 1 to 4, **characterized in that** at least one first bundle made of electrically conductive fibers (38) is connected with an electrical conductor at a connection point (36).

6. The wind turbine rotor blade (10) according to one of claims 1 to 5, **characterized in that** a metallic wire is incorporated into the at least one first bundle of electrically conductive fibers (38) at a connection point (36).

7. The wind turbine rotor blade (10) according to one of claims 1 to 6, **characterized in that** the heating element (34) has a second bundle of electrically conductive fibers (56), with which a second surface section (54) of the heating element (34) is heatable, wherein a first end of the first bundle made of electrically conductive fibers (38) is connected electrically with a first end of the second bundle of electrically conductive fibers (56) and a second end of the first bundle of electrically conductive fibers (38) is connected electrically with a second end of the second bundle of electrically conductive fibers (56).

8. The wind turbine rotor blade (10) according to claim 7, **characterized in that** the first surface section (40) and the second surface section (54) are strung together in a longitudinal direction of the heating element (34), wherein the second edge (44) of the first surface section (40) and a first edge (60) of the second surface section (54) are arranged next to each other and a distance between the first edge (42) of the first surface section (40) and the first edge (60) of the second surface section (54) is bridged by a longitudinal section (66) of the second bundle of electrically conductive fibers (56) arranged mainly in a straight line and/or a distance between the second edge (44) of the first surface section (40) and a second edge (62) of the second surface section (54) is bridged by a longitudinal section (64) of the first bundle of electrically conductive fibers (38) arranged mainly in a straight line.

9. The wind turbine rotor blade (10) according to one of claims 1 to 8, **characterized in that** the wind turbine rotor blade (10) has a pressure side (26), a suction side (28), a first electrical supply line (30), which is arranged on the pressure side (26), a second electrical supply line (32), which is arranged on the suction side (28), and a plurality of heating elements (34), wherein each of the heating elements (34) has a first connection point (36) and a second connection point (36) and the first connection points (36) are connected electrically with the first supply line (30) and the second connection points (36) are connected electrically with the second supply line (32).

10. The wind turbine rotor blade (10) according to claim 9, **characterized in that** the electrical heating elements (34) are arranged at different radius positions and each of the electrical heating elements (34) has a heatable surface and an electrical resistance, wherein a quotient of the electrical resistance to the heatable surface increases in the direction from a blade root (14) to a blade tip (12).

11. The wind turbine rotor blade (10) according to claim 9 or 10, **characterized in that** the first supply line (30) and/or the second supply line (32) is connected electrically with at least one lightning receptor (16) in the area of the blade tip (12).

12. The wind turbine rotor blade (10) according to claim 11, **characterized in that** the first supply line (30) is connected galvanically with the lightning receptor (16) and the second supply line (32) is connected galvanically via a discharger or a varistor arrester with the lightning receptor (16) or vice versa.

13. The wind turbine rotor blade (10) according to claim 11 or 12, **characterized in that** at least one further lightning receptor (72) is arranged at a distance from the blade tip (12) and is connected with the first supply line (30) or with the second supply line (32).

14. The wind turbine rotor blade (10) according to claims 1 to 13, **characterized in that** the electrical heating element (34) is structured in a multi-layered manner and has an adhesive layer for the connection with the rotor blade and/or an erosion protection layer.

## Revendications

1. Pale de rotor d'éolienne (10) dotée d'un élément chauffant électrique (34) qui présente une première section de surface (40) chauffante avec un premier bord (42) et un deuxième bord (44) disposés l'un en face de l'autre et entre lesquels la première section de surface (40) présente une longueur de section de surface (46), **caractérisée en ce qu'**est disposé dans la première section de surface (40) au moins un premier faisceau de fibres conductrices de courant (38) formant entre le premier bord (42) et le deuxième bord (44) un trajet de courant avec une longueur de trajet, la longueur du trajet de courant étant au moins deux fois plus grande que la longueur de la section de surface (46).

2. Pale de rotor d'éolienne (10) selon la revendication 1, **caractérisée en ce que** l'élément chauffant électrique (34) présente un matériau porteur planaire (58) sur lequel est fixé le au moins un premier faisceau de fibres conductrices de courant (38) dans un arrangement prédéfini.

3. Pale de rotor d'éolienne (10) selon la revendication 1 ou 2, **caractérisée en ce que** la pale de rotor d'éolienne (10) présente un côté pression (26) et un côté aspiration (28), le premier bord (42) étant disposé sur le côté pression (26) et le deuxième bord (44) sur le côté aspiration (28).

4. Pale de rotor d'éolienne (10) selon l'une quelconque des revendications 1 à 3, **caractérisée en ce que** la première section de surface (40) présente une première zone partielle (68) et une deuxième zone partielle (70) pouvant toutes deux être chauffées avec le au moins un premier faisceau de fibres conductrices de courant (38), dans lequel le au moins un premier faisceau de fibres conductrices de courant (38) présente dans chacune des deux zones partielles (68, 70) une pluralité de sections régulièrement disposées et les distances entre les sections adjacentes dans la première zone partielle (68) sont plus petites que dans la deuxième zone partielle (70).

5. Pale de rotor d'éolienne (10) selon l'une quelconque des revendications 1 à 4, **caractérisée en ce que** le au moins un premier faisceau de fibres conductrices de courant (38) est raccordé à un point de connexion (36) avec un conducteur électrique.

6. Pale de rotor d'éolienne (10) selon l'une quelconque des revendications 1 à 5, **caractérisée en ce qu'**un fil métallique est incorporé dans le au moins un premier faisceau de fibres conductrices de courant (38) à un point de connexion (36).

7. Pale de rotor d'éolienne (10) selon l'une quelconque des revendications 1 à 6, **caractérisée en ce que** l'élément chauffant (34) présente un deuxième faisceau de fibres conductrices de courant (56) avec lequel une deuxième section de surface (54) de l'élément chauffant (34) peut être chauffée, une première extrémité du premier faisceau de fibres conductrices de courant (38) étant raccordée électriquement à une première extrémité du deuxième faisceau de fibres conductrices de courant (56) et une deuxième extrémité du premier faisceau de fibres conductrices de courant (38) à une deuxième extrémité du deuxième faisceau de fibres conductrices de courant (56).

8. Pale de rotor d'éolienne (10) selon la revendication 7, **caractérisée en ce que** la première section de surface (40) et la deuxième section de surface (54) sont alignés dans un sens longitudinal de l'élément chauffant (34), dans lequel le deuxième bord (44) de la première section de surface (40) et un premier bord (60) de la deuxième section de surface (54) sont adjacents et une distance entre le premier bord (42) de la première section de surface (40) et le premier bord (60) de la deuxième section de surface (54) sont pontés par une section longitudinale (66) essentiellement rectiligne du deuxième faisceau de fibres conductrices de courant (56) et/ou une distance entre le deuxième bord (44) de la première section de surface (40) et un deuxième bord (62) de la deuxième section de surface (54) est pontée par une section longitudinale (64) essentiellement rectiligne du premier faisceau de fibres conductrices de courant (38).

9. Pale de rotor d'éolienne (10) selon l'une quelconque des revendications 1 à 8, **caractérisée en ce que** la pale de rotor d'éolienne (10) présente un côté pression (26), un côté aspiration (28), une première conduite d'alimentation électrique (30) disposée sur le côté pression (26), une deuxième conduite d'alimentation électrique (32) disposée sur le côté aspiration (28) et une pluralité d'éléments chauffants (34), chacun des éléments chauffants (34) présentant un premier point de connexion (36) et un deuxième point de connexion (36) et les premiers points de connexion (36) étant raccordés électriquement à la première conduite d'alimentation (30) et les deuxièmes points de connexion (36) étant raccordés électriquement à la deuxième conduite d'alimentation (32).

10. Pale de rotor d'éolienne (10) selon la revendication 9, **caractérisée en ce que** les éléments chauffants électriques (34) sont disposés à différentes positions de rayon et chacun des éléments chauffants électriques (34) présente une surface chauffante et une résistance électrique, un quotient de la résistance électrique et la surface chauffante augmentant dans le sens d'un pied de pale (14) vers une extrémité de pale (12).

11. Pale de rotor d'éolienne (10) selon la revendication 9 ou 10, **caractérisée en ce que** la première conduite d'alimentation (30) et/ou la deuxième conduite d'alimentation (32) est raccordée électriquement à au moins un récepteur d'éclair (16) au niveau de l'extrémité de pale (12).

12. Pale de rotor d'éolienne (10) selon la revendication 11, **caractérisée en ce que** la première conduite d'alimentation (30) est reliée au récepteur d'éclair (16) et la deuxième conduite d'alimentation (32) via un éclateur ou un parafoudre à varistance au récepteur d'éclair (16) ou vice versa.

13. Pale de rotor d'éolienne (10) selon la revendication 11 ou 12, **caractérisée en ce que** au moins un autre récepteur d'éclair (72) est disposé à une distance de l'extrémité de pale (12) et est raccordé à la première conduite d'alimentation (30) ou à la deuxième conduite d'alimentation (32).

14. Pale de rotor d'éolienne (10) selon la revendication 1 à 13, **caractérisée en ce que** l'élément chauffant électrique (34) a une structure en plusieurs couches et présente une couche adhésive pour la liaison avec la pale de rotor et/ou une couche de protection contre l'érosion.
